# EUROPEAN PATENT APPLICATION

(11) **EP 1 318 299 A1**
(43) Date of publication of application: **11.06.2003**
(21) Application number: 01890333.6
(22) Date of filing: 07.12.2001
(51) Int. Cl.: F03B 13/10, H02K 21/12

(54) **Bulb turbine-generator unit**

(71) Applicant: VA TECH HYDRO GmbH & Co., 1140 Wien (AT)
(72) Inventor: Duflon, Pierre, 38120 St-Egrève (FR); Fonkenell, Jacques, 38140 Izeaux (FR)
(74) Representative: Rieberer, Stefan, Dipl.-Ing.

(57) **Abstract**

Conventional bulb turbine-generator units usually provide an external cooling system, e.g. an internal air circulation system combined with an external heat exchanger to dissipate the heat generated by electrical losses in the generator and excitation windings. These cooling systems, however, are costly.

The present invention describes now a bulb turbine-generator unit (1) which avoids the above disadvantages by using a synchronous generator (3) with a permanent magnetic excitation having permanent magnetic poles (13) which are arranged on the rotor (12) of the generator and by cooling the generator (3) only by the flow of the turbine driving media by the heat transfer from the exterior surface of the bulb (4) to the media.

## Description

The present invention pertains to a bulb type turbine-generator unit arranged to operate in a hydraulic fluid, comprising a generator and a turbine, the generator and the runner of the turbine, having a plurality of turbine blades, are both rigidly mounted on a shaft arranged rotatably with respect to the bulb.

Conventional bulb turbine-generator units usually employ synchronous generators with electrical excitation situated on the rotor. A problem with such units is the heat generated due to the electrical losses in the rotor windings and in the excitation windings. Especially generators with high nominal power, e.g. greater than 10 MW, generate large amounts of heat which have to be dissipated. For such generators it is therefore imperative to provide an external cooling system to dissipate the heat, like for example an internal air ventilation system combined with external heat exchangers, located outside the bulb, like for example as shown in the WO 97/09771. These cooling systems are usually very expensive in the sense of construction effort as well as of costs. Furthermore, the electrical excitation increases the size, the weight and the complexity of such a bulb turbine-generator unit. Because of the high mass moment of inertia of the rotor due to the excitation system, the unit is also difficult to stop, e.g. in the case of an emergency.

Asynchronous generators, on the other hand, have a low efficiency and a high inductive power factor which makes it necessary to install expensive capacitors.

It is therefore the objective of the invention to provide a bulb turbine which can be operated without an external cooling system, which shows a compact, constructive simple design and which shows a significantly smaller size compared to conventional bulb turbines of the same nominal power.

This objective is attained according to the present invention by providing a generator of a synchronous type with a permanent magnetic excitation comprising permanent magnetic poles arranged on the rotor of the generator, which is in heat transfer contact, e.g. radiation, convection and/or conduction type heat transfer contact, with the exterior surface of the bulb which is exclusively cooled by the flow of hydraulic fluid driving the turbine, e.g. by radiation, convection and/or conduction type heat transfer.

By providing a synchronous generator with a permanent magnetic excitation, no excitation windings are needed and therefore no heat is generated in the excitation system and only the heat generated in the inevitable generator windings has to be dissipated. Hence, it is sufficient to cool the generator only with the flowing hydraulic fluid via the exterior surface of the bulb, which makes an additional external cooling system superfluous.
Moreover, because the rotor is equipped only with permanent magnets, the construction of the rotor and consequently also of the entire generator becomes very simple, compact and light weight. This facilitates the insertion of the bulb turbine-generator unit inside the water passages and also the maintenance of a bulb turbine-generator unit according to the present invention because there are less and easier components to maintain and this decreases at the same time the failure rate of the unit.
The above mentioned advantages in the construction and the fact that a conventional electrical excitation system can be omitted allows a significant cost reduction, which leads also directly to a considerable economic advantage.

When the exterior surface of the bulb is at least partially enlarged, preferably in the form of cooling ribs or fins, the heat transmission from the surface to the flowing media can be advantageously increased, which obviously improves directly the cooling effect.

It is especially useful to mount the stator of the generator directly on the interior surface of the bulb, preferably to enable a conduction heat transmission from the stator to the exterior surface of the bulb. This ensures that the heat flow is led directly from the stator, the part of the generator which generates most of the heat to be dissipated, to the bulb shell, where it is dissipated to the flowing media by conduction, convection and radiation heat transmission.

If at least one fan is provided on the shaft which produces an air circulation inside the bulb the heat dissipation from parts inside of the bulb, e.g. bearings, can be significantly improved.

The operation of a bulb turbine may be improved, if the turbine is provided with guide vanes which are located upstream of the turbine runner and if the guide vanes and/or the turbine blades are adjustable with regard to the direction of flow of the media. An adjustable distributor of a turbine and adjustable turbine blades allow the optimal adjustment of the turbine for each operating point.

The sealing of the bulb is significantly improved when the interior of the bulb is pressurised by a pressurising means, e.g. a compressor, so that the pressure inside the bulb is higher than the pressure outside the bulb, which ensures that no water penetrates into the bulb.

The use of a bulb type turbine-generator unit according to the present invention is especially useful in a hydro power plant and particularly in such where a plurality of bulb type turbine-generator units are at least partly arranged side by side and/or on top of each other and combined to one or more modules, which, in advantageous manner, can be individually and independently switched on and off.

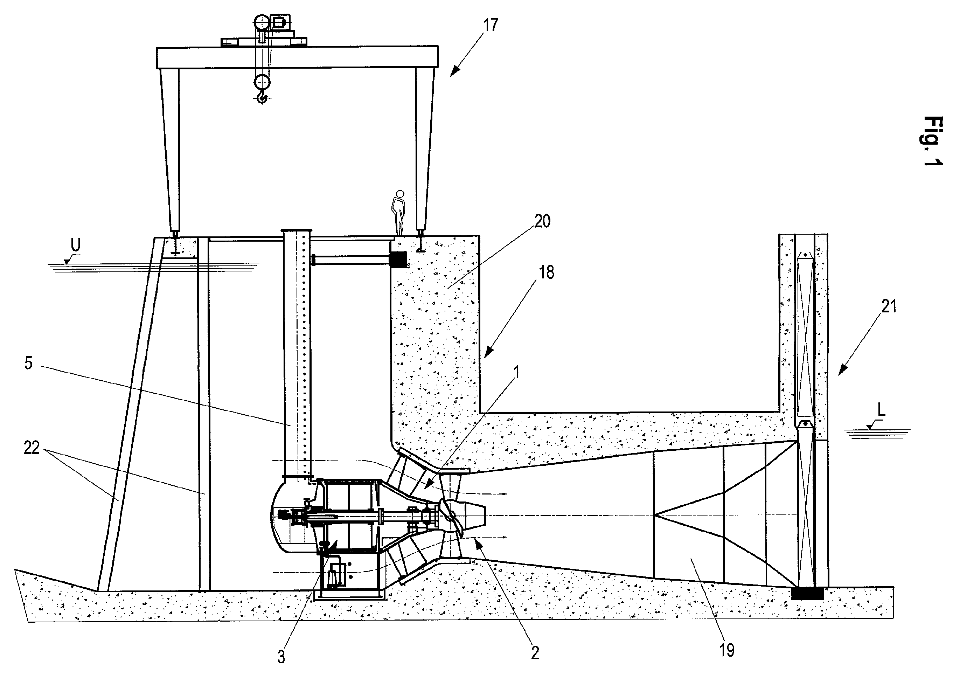

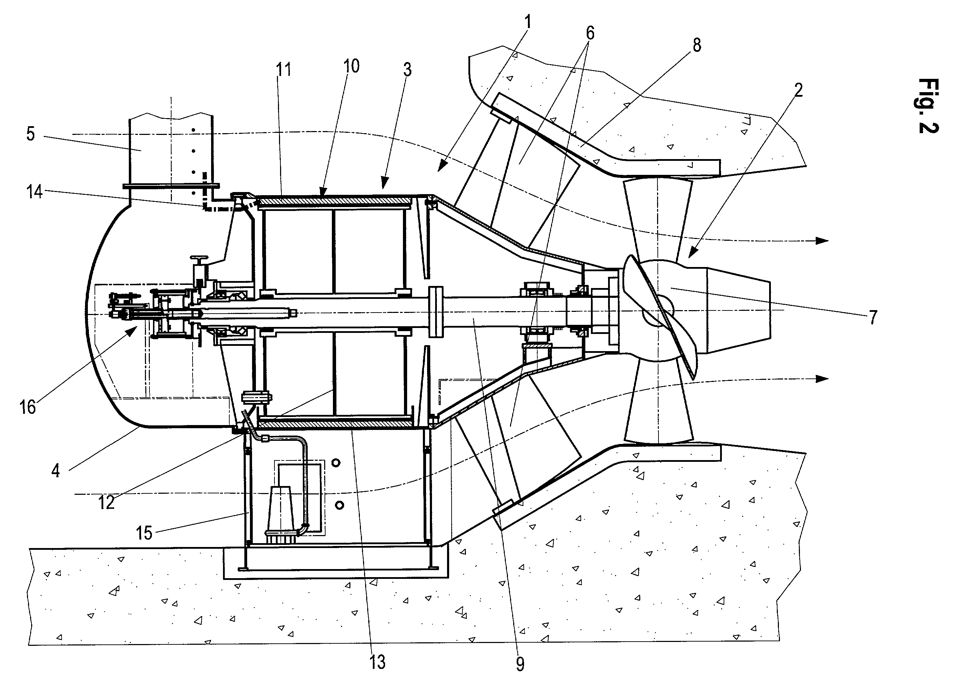

The invention is described in the following with the help of the exemplary, non limiting figures 1 and 2, wherein
fig. 1 depicts a section of a hydro power plant with a bulb turbine-generator unit according to the invention, and
fig. 2 a detailed graphic of a bulb turbine according to the invention.

In fig. 1 a section of an exemplary hydro power plant is shown. The plant structure 18 is in this example made of concrete and forms the dam 20 as well as the draft tube 19, which is terminated by the weir 21. The dammed up media, here water, having an upper pool level U, flows via the draft tube 19 to a lower pool level L and drives the bulb turbine-generator unit 1 which is located upstream at the entrance of the draft tube 19. The arrows in fig. 1 show the flow direction of the water. The bulb turbine-generator unit 1 may be shut down by closing a gate, which stops the flow of the water.

On top of the dam structure 20 there is also a crane 17 which may be used for different tasks, like mounting or disassembling of the bulb turbine 1 or the cleaning of rakes 22. Moreover, an access shaft 5 provides access from the top of dam structure 20 to the interior of the bulb turbine, e.g. for maintenance work inside the bulb turbine.

The construction of the bulb turbine-generator unit 1 is shown in greater detail in fig. 2. The bulb 4 is supported by the support 15 at the cylindrical part of the bulb 4. The downstream part of the bulb is conical shaped and is terminated by the runner 7 of the turbine 2. The upstream part of the bulb is dome-shaped in order to minimise the flow resistance and the generation of turbulence in the water. The upstream part of the bulb 4 provides also an access shaft 5 to allow the access to the interior of the bulb turbine-generator unit 1.

The bulb 4 may of course also be shaped differently and the access shaft 5 may also be located on another part of the bulb 4, without leaving the general idea of the invention.
It is also possible to build the bulb turbine-generator unit 1 without access shaft 5, especially when the dimensions of the bulb 4 are too small to provide access to the interior of the bulb. Small, compact bulb turbine-generator units 1 are usually realised without access shaft 5.

At the conical part of the bulb 4 guide vanes 6 are mounted which extend radially towards the dam structure 18, where they are anchored in the casing 8 of the distributor of the turbine 2. The casing 8 is rigidly integrated in the dam structure 18 and extends axially downstream beyond the turbine blades and is for example made of metal, like stainless steel. In this example the orientation of the guide vanes 6 is fixed but could also be adjustable with regard to the flow direction of the water in order to allow the optimisation of the operation of the turbine 2.

The support of the bulb turbine-generator unit 1 may of course also be realised in any other way as outlined above. For example would it also be possible to hold the bulb turbine-generator unit 1 only with the access shaft 5 and fixed guide vanes 6 without additional support structure 15.

The runner 7 of the turbine 2 is rigidly mounted on the downstream end of a rotating shaft 9, which extends axially through the bulb 4 and is held in the bulb 4 by bearings. At the upstream end of the shaft 9 the actuation 16 of the adjustment mechanism of the turbine blades is located, by means of which the orientation of the turbine blades may be adjusted with regard to the flow direction of the water in order to allow the optimisation of the operation of the turbine 2.
This adjustment mechanism could also be installed in another location for example in the runner 7 or inside the shaft 9, or may be omitted in case of a small turbine.
The shaft may also be equipped with a break, e.g. an electrical or mechanical break, to allow the quick stop of the turbine-generator unit, e.g. in the case of an emergency, and also with a security lock of the shaft, e.g. a bolt which engages in a corresponding hole of the rotor body, in order to allow a secure working inside the bulb 4.

Between actuation 16 and runner 7 of the turbine 2 the rotor 12 of the generator 3 is rigidly mounted on the shaft 9 and is therefore driven by the turbine 2. On the surface area of the rotor permanent magnetic poles, i.e. permanent magnets, 13 are located, which serve as magnetisation of the synchronous type generator 3.
Moreover, the rotor 12 provides also axial holes in its wheel body for free accessibility of the downstream part of the bulb 4.

Coaxial to the rotor 12 a stator 10 is directly mounted on the inside of the bulb 4, which comprises the core sheets 11 and the windings in well known manner. The electrical lines 14 are led through the access shaft 5 to the outside, e.g. to a transformer station. The connection of the stator 10 to the bulb 4 is made so that an excellent heat transmission from the stator 10 to the bulb 4 is ensured.

During the operation of the generator heat, e.g. caused by electrical losses, is generated only in the electrical parts of the generator 10, i.e. in the stator 10. In the rotor 12, however, no heat is generated. Therefore, the generated heat to be cooled is directly led to the outside surface of the bulb 4 by means of conduction type heat transfer, where it is dissipated into the flowing water. Hence, the cooling is ensured only by the flow of water and no additional external cooling system, e.g. a closed air ventilation system inside the bulb with heat exchangers, has to be provided. The majority of the heat to be dissipated is generated in the electrical windings and the stator core sheets 11, but heat is also generated by mechanical friction, e.g. in the bearings or the seals. This heat flow is also led to the bulb shell via the structure of the bulb 4 to be dissipated into the flowing water.
It is of course also possible to integrate one or several fans, e.g. driven by the shaft 9, to produce an additional air circulation inside the bulb 4 which supports the heat dissipation from the hot parts inside the bulb 4, e.g. the bearings, and which allows a better convection heat transfer from the air to the bulb shell.
In the example of fig. 2 the bulb 4 shows a smooth outside surface but which could also be realised with an enlarged surface, e.g. with cooling fins or ribs, in order to increase the heat dissipation. In this case, however, care must be taken not to introduce turbulence into the water flow, which would decrease the efficiency of the turbine.

The interior of the bulb 4 is pressurised by an external compressor not shown in the figures in order to generate an overpressure with regard to the pressure of the flowing water to ensure that the interior of the bulb 4 is completely sealed against the exterior and no water penetrates the interior.

In this example, for an easier assembling of the bulb turbine, the bulb 4 is built of three parts, the conical, the cylindrical and the dome-shaped part, and the shaft 9 is built of two parts, an downstream and an upstream part. This allows a sequential assembling of the unit which eases the assembling process significantly.

## Claims

1. Bulb type turbine-generator unit arranged to operate in a hydraulic fluid, comprising a generator and a turbine, the generator and the runner of the turbine, having a plurality of turbine blades, are both rigidly mounted on a shaft arranged rotatably with respect to the bulb, **characterised in that** the generator is of a synchronous type generator with a permanent magnetic excitation comprising permanent magnetic poles arranged on the rotor of the generator and **in that** the stator of the generator is in heat transfer contact, e.g. radiation, convection and/or conduction type heat transfer contact, with the exterior surface of the bulb and is cooled exclusively by the flow of hydraulic fluid driving the turbine, e.g. by radiation, convection and/or conduction type heat transfer.

2. Bulb type turbine-generator unit according to claim 1, **characterised in that** the exterior surface of the bulb is at least partially enlarged, preferentially in the form of cooling ribs or fins.

3. Bulb type turbine-generator unit according to claims 1 or 2, **characterised in that** the stator of the generator is directly mounted on the interior surface of the bulb, preferably to enable a conduction heat transmission from the stator to the exterior surface of the bulb.

4. Bulb type turbine-generator unit according to one of the claims 1 to 3, **characterised in that** at least one fan is provided on the shaft which produces an air circulation inside the bulb.

5. Bulb type turbine-generator unit according to one of the claims 1 to 3, **characterised in that** the turbine is provided with guide vanes which are located upstream of the turbine runner.

6. Bulb type turbine-generator unit according to one of the claims 1 to 5, **characterised in that** the orientation of the guide vanes and/or the turbine blades are adjustable with regard to the direction of flow of the media.

7. Bulb type turbine-generator unit according to one of the claims 1 to 6, **characterised in that** a pressurising means to pressurise the interior of the bulb is provided, e.g. a compressor, capable of increasing the pressure inside the bulb above the pressure outside the bulb.

8. Use of the bulb type turbine-generator unit according to one of the claims 1 to 7 in a hydro power plant.

9. Use according to claim 8, wherein a plurality of bulb turbine-generator units are at least partly arranged side by side and/or on top of each other

10. Use according to claim 9, wherein a plurality of bulb turbine-generator units are rigidly connected together to form one or more movable modules.

11. Use according to claim 9 or 10, wherein the bulb turbine-generator units and/or the modules can be individually and independently switched on and off.
